# FASCICULE DE BREVET EUROPEEN

(11) **EP 2 917 092 B1**
(45) Date de publication et mention de la délivrance du brevet: **21.02.2018**
(21) Numéro de dépôt: 13791847.0
(22) Date de dépôt: 16.10.2013
(51) Int. Cl.: B62D 25/06

(54) **VEHICULE AUTOMOBILE COMPORTANT UNE TRAVERSE AVANT RELIEE AU COTE D'HABITACLE PAR UNE LIAISON PIVOTANTE**
KRAFTFAHRZEUG MIT EINEM DURCH EINE SCHWENKVERBINDUNG MIT DER INSASSENRAUMSEITE VERBUNDENEN VORDEREN QUERTRÄGER
MOTOR VEHICLE COMPRISING A FRONT CROSSMEMBER CONNECTED TO THE PASSENGER COMPARTMENT SIDE BY A PIVOT CONNECTION

(30) Priorité: 08.11.2012 FR 1260608
(43) Date de publication de la demande: 16.09.2015
(73) Titulaire: PSA Automobiles SA, 78300 Poissy (FR)
(72) Inventeur: BENANE, Said, F-94550 Chevilly Larue (FR)
(74) Mandataire: Fosse, Danièle
(86) Numéro de dépôt international: PCT/FR2013/052472
(87) Numéro de publication internationale: WO 2014/072602

(56) Documents cités:
- DE-A1-102004 029 737
- FR-A1- 2 934 834
- JP-A- S5 671 671
- US-A1- 2011 057 482

## Description

La présente invention concerne un véhicule automobile comportant une traverse qui relie entre elles les deux parties supérieures des côtés d'habitacle dans une zone située au-dessus de la baie du pare-brise. Le document US 2011/0057482 A1 divulgue le préambule de la revendication 1.

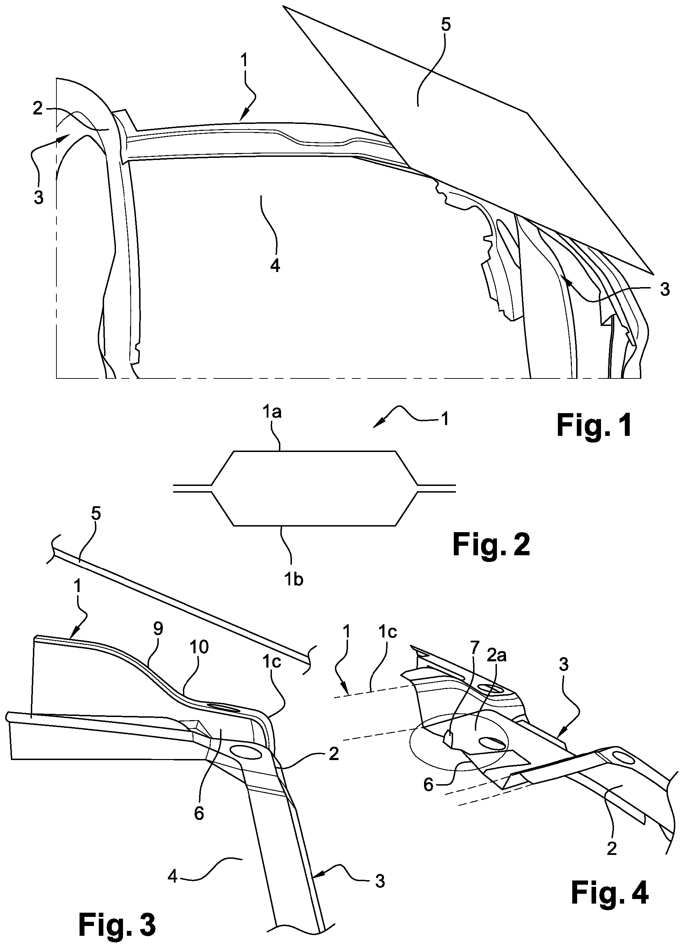

La figure 1 représente une partie de la caisse d'un véhicule automobile.

La référence 1 désigne la traverse qui est destinée à relier entre elles, les deux parties supérieures 2 des côtés d'habitacle 3, dans une zone située au-dessus de la baie 4 du pare-brise.

Cette traverse 1 comprend une coque supérieure 1a en tôle, soudée sur une coque inférieure 1b en tôle, comme montré sur la vue en coupe transversale représentée sur la figure 2.

Ces deux coques 1a, 1b forment entre elles, un corps creux.

Cette traverse 1 doit résister aux efforts engendrés sur elle en cas de retournement du véhicule.

A cet effet, pour être homologués les véhicules doivent subir des tests appelés GS 39 qui consistent à appliquer sur la traverse 1 une plaque en acier 5, comme montré sur la figure 2.

Cette plaque 5 est appliquée près d'une extrémité de la traverse 1 sous un angle égal à 30°par rapport à un plan horizontal.

L'effort appliqué sur la traverse 1 est égal à 1,3 tonne.

Dans le cas des cabriolets dépourvus de pavillon rigide pour que la traverse 1 puisse résister aux efforts précités, celle-ci doit être renforcée pour augmenter sa raideur.

Un tel renforcement de la traverse augmente la masse du véhicule, ce qui accroît le coût et la consommation du véhicule.

Le but de la présente invention est de remédier aux inconvénients ci-dessus.

Ce but est atteint, selon l'invention, grâce à un véhicule automobile comportant une traverse qui relie entre elles les deux parties supérieures des côtés d'habitacle dans une zone située au-dessus de la baie du pare-brise, cette traverse comprenant une coque supérieure en tôle soudée sur une coque inférieure en tôle définissant entre elles un corps creux allongé, caractérisé en ce que chacune des deux extrémités de la traverse est reliée à la partie supérieure de l'un des deux côtés d'habitacle par une liaison permettant à une partie de la traverse de pivoter suivant un axe sensiblement parallèle à l'axe longitudinal du véhicule en cas de choc exercé sur ladite partie de la traverse.

Ce pivotement d'une partie de la traverse sous l'effet du choc permet à celle-ci de se déformer progressivement en absorbant l'énergie du choc.

De ce fait, la traverse n'a nullement besoin d'être renforcée pour résister aux efforts. Selon l'invention, chacune des deux extrémités de la traverse comporte une surface en appui sur une surface complémentaire de la partie supérieure de l'un des deux côtés d'habitacle, les deux surfaces étant reliées l'une à l'autre par un crochet solidaire de l'une des deux surfaces engagé dans un trou réalisé dans l'autre surface.

Ce crochet empêche que l'extrémité de la traverse échappe de la partie supérieure du côté d'habitacle en cas de choc exercé sur la traverse.

Dans un mode de réalisation préféré de l'invention, le crochet est constitué par une patte découpée et pliée sur une partie en tôle de ladite partie supérieure de l'un des côtés d'habitacle, cette patte étant engagée dans un trou réalisé dans la coque inférieure de la traverse.

De préférence également, ledit crochet est situé sur ledit axe de pivotement de ladite partie de la traverse.

Dans un mode de réalisation particulièrement avantageux de l'invention, la coque supérieure de la traverse comprend dans une zone comprise entre chacune des deux extrémités de la traverse et le milieu de celle-ci, une partie en saillie qui est reliée à une extrémité de la traverse par une partie en creux arrondie.

Lors d'un test de choc d'un véhicule mettant en oeuvre la plaque évoquée dans l'introduction de la présente description, cette plaque vient en appui sur l'extrémité de la traverse et la partie en saillie, ce qui a pour effet de déformer celle-ci de telle sorte qu'elle épouse la surface de la plaque.

Cette déformation favorise l'absorption de l'énergie du choc.

Selon une autre particularité avantageuse de l'invention, chacune des extrémités de la traverse est engagée axialement dans un logement réalisé dans la partie supérieure de l'un des deux côtés d'habitacle, ledit logement comprenant ladite surface complémentaire sur laquelle s'appuie ladite surface de l'extrémité de la traverse et deux surfaces évasées vers le haut reliées chacune à l'un des deux bords de ladite surface complémentaire.

De préférence, ledit logement comprend en outre une surface s'étendant au-dessus de l'extrémité de la traverse.

L'invention s'applique de préférence à un véhicule automobile comportant un pavillon amovible, comme dans le cas par exemple d'un cabriolet.

Dans ce cas, la traverse avant doit supporter elle seule les efforts exercés lors des essais de choc évoqués plus haut ou en cas de retournement du véhicule.

D'autres particularités et avantages de l'invention apparaîtront encore tout au long de la description ci-après.

Aux dessins annexés, donnés à titre d'exemples, non limitatifs :
- la figure 3 est une vue en coupe partielle dans le sens de la longueur de la traverse d'un véhicule selon l'invention montrant l'extrémité de la traverse, la partie supérieure du côté d'habitacle et une plaque d'effort,
- la figure 4 est une vue en perspective montrant partiellement la partie supérieure du côté d'habitacle qui est destinée à recevoir l'extrémité de la traverse,
- la figure 5 est une vue en coupe transversale montrant l'extrémité de la traverse engagée dans un logement de la partie supérieure du côté d'habitacle,
- les figures 6, 7 et 8 sont des vues analogues à la figure 3 illustrant trois phases successives d'un essai de choc sur la traverse.

La figure 3 représente partiellement une traverse 1 qui relie entre elles les deux parties supérieures 2 des côtés d'habitacle 3 dans une zone située au-dessus de la baie 4 du pare-brise.

Cette traverse 1 comprend une coque supérieure en tôle soudée sur une coque inférieure en tôle définissant entre elles un corps creux allongé.

Conformément à l'invention, chacune des deux extrémités, telles que l'extrémité 1c de la traverse 1 est reliée à la partie supérieure 2 de l'un 3 des deux côtés d'habitacle par une liaison permettant à une partie de la traverse 1 de pivoter suivant un axe 6 sensiblement parallèle à l'axe longitudinal du véhicule en cas de choc exercé sur la partie ci-dessus de la traverse 1.

Ce choc est illustré par l'impact de la plaque d'effort 5 utilisée lors d'un essai de choc du type GS 39.

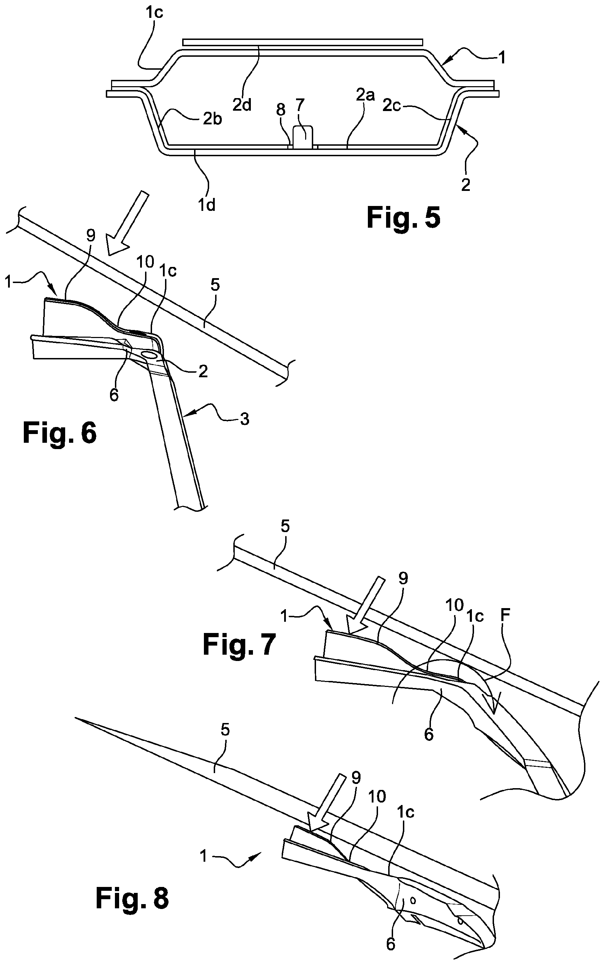

Chacune des deux extrémités, telles que 1c de la traverse 1 comporte (voir figures 4 et 5) une surface 1d en appui sur une surface complémentaire 2a de la partie supérieure 2 de l'un 3 des deux côtés d'habitacle.

Ces deux surfaces 1d, 2a sont reliées l'une à l'autre par un crochet 7 solidaire de l'une 2a des deux surfaces engagé dans un trou 8 réalisé dans l'autre surface 1d, comme montré sur la figure 5.

Dans l'exemple représenté, le crochet 7 est constitué par une patte découpée et pliée sur une partie en tôle 2a de la partie supérieure 2 de l'un 3 des côtés d'habitacle.

Cette patte 7 est engagée dans un trou 8 réalisé dans la coque inférieure 1d de la traverse 1.

Comme on le voit sur la figure 4, le crochet 7 est situé sur l'axe de pivotement 6 de la partie de la traverse 1, situé entre son extrémité et son milieu.

La figure 3 montre en outre que la coque supérieure de la traverse 1 comprend dans une zone comprise entre chacune des deux extrémités, telles que 1c de la traverse 1 et le milieu de celle-ci, une partie en saillie 9 qui est reliée à l'extrémité 1c de la traverse 1 par une partie en creux arrondie 10.

Les rayons de courbure des parties 9 et 10 sont respectivement convexe et concave vers le haut.

La fonction de ces parties 9 et 10 sera expliquée plus loin.

La figure 5 montre par ailleurs que l'extrémités 1c de la traverse 1 est engagée axialement dans un logement réalisé dans la partie supérieure 2 de l'un 3 des deux côtés d'habitacle.

Ce logement comprend la surface complémentaire 2a sur laquelle s'appuie la surface 1d de l'extrémité 1c de la traverse 1 et deux surfaces 2b, 2c évasées vers le haut reliées chacune à l'un des deux bords de la surface complémentaire 2a.

Le logement ci-dessus comprend en outre une surface 2d s'étendant au-dessus de l'extrémité 1c de la traverse 1.

Ainsi, le logement est fermé sur tous ses côtés.

Habituellement l'extrémité de la traverse avant est soudée à la partie supérieure du côté d'habitacle.

Dans le cas de l'invention, chacune des extrémités, telles que l'extrémité 1c de la traverse 1 est simplement engagée dans un logement 2a, 2b, 2c, 2d réalisé sur la partie supérieure 2 de chacun des côtés d'habitacle.

De ce fait, l'extrémité de la traverse 1 peut légèrement pivoter autour d'un axe 6 passant par le crochet 7 qui retient l'extrémité de la traverse 1 dans le logement ci-dessus.

On va maintenant expliquer en référence aux figures 6, 7 et 8, le comportement de la traverse 1 en cas de choc mettant en oeuvre la plaque d'effort 5.

La figure 6 montre la position de la plaque 5 juste avant son impact avec la traverse 1.

La plaque 5 forme un angle de 30°par rapport à un plan horizontal.

Lors de l'impact (voir figure 7), la plaque 5 heurte la partie en saillie 9 en exerçant sur celle-ci une force de l'ordre de 1,5 tonne.

Cette force provoque le pivotement d'une partie de la traverse 1 dans le sens de la flèche F jusqu'à la position finale montrée sur la figure 8, dans laquelle la partie de la traverse 1 épouse la surface plane de la plaque 5.

La déformation de la traverse 1 entre la position montrée sur la figure 6 et celle indiquée sur la figure 8 a absorbé l'énergie du choc.

Lors de cette déformation la traverse 1 est restée solidaire de la partie supérieure 2 du côté d'habitacle grâce au crochet 7.

## Revendications

1. Véhicule automobile comportant une traverse (1) qui relie entre elles les deux parties supérieures (2) des côtés d'habitacle (3) dans une zone située au-dessus de la baie (4) du pare-brise, cette traverse (1) comprenant une coque supérieure en tôle soudée sur une coque inférieure en tôle définissant entre elles un corps creux allongé, chacune des deux extrémités (1c) de la traverse (1) étant reliée à la partie supérieure (2) de l'un des deux côtés d'habitacle (3), **caractérisé en ce que** chacune des deux extrémités (1c) de la traverse (1) comporte une surface (1d) qui est en appui sur une surface complémentaire (2a) de la partie supérieure (2) de l'un des deux côtés d'habitacle, les deux surfaces (1d, 2a) étant reliées l'une à l'autre par un crochet (7) solidaire de l'une des deux surfaces (1d, 2a) engagé dans un trou (8) réalisé dans l'autre surface, la liaison permettant à une partie de la traverse (1) de pivoter suivant un axe (6) sensiblement parallèle à l'axe longitudinal du véhicule en cas de choc exercé sur ladite partie de la traverse (1).

2. Véhicule automobile selon la revendication 1, **caractérisé en ce que** le crochet est constitué par une patte (7) découpée et pliée sur une partie en tôle de ladite partie supérieure (2) de l'un des côtés d'habitacle, cette patte (7) étant engagée dans un trou (8) réalisé dans la coque inférieure de la traverse (1).

3. Véhicule automobile selon l'une des revendications 1 ou 2, **caractérisé en ce que** ledit crochet (7) est situé sur ledit axe (6) de pivotement de ladite partie de la traverse (1).

4. Véhicule automobile selon l'une des revendications 1 à 3, **caractérisé en ce que** la coque supérieure de la traverse (1) comprend dans une zone comprise entre chacune des deux extrémités (1c) de la traverse (1) et le milieu de celle-ci, une partie en saillie (9) qui est reliée à une extrémité (1c) de la traverse (1) par une partie en creux arrondie (10).

5. Véhicule automobile selon l'une des revendications 2 à 5, **caractérisé en ce que** chacune des extrémités (1c) de la traverse (1) est engagée axialement dans un logement réalisé dans la partie supérieure (2) de l'un des deux côtés d'habitacle (3), ledit logement comprenant ladite surface complémentaire (2a) sur laquelle s'appuie ladite surface (1d) de l'extrémité de la traverse (1) et deux surfaces évasées (2b, 2c) vers le haut reliées chacune à l'un des deux bords de ladite surface complémentaire (2a).

6. Véhicule automobile selon la revendication 5, **caractérisé en ce que** ledit logement comprend en outre une surface (2d) s'étendant au-dessus de l'extrémité (1c) de la traverse (1).

7. Véhicule automobile selon l'une des revendications 1 à 6, **caractérisé en ce qu'**il comporte un pavillon amovible.

8. Véhicule automobile selon la revendication 7, **caractérisé en ce qu'**il est un cabriolet.

## Patentansprüche

1. Kraftfahrzeug, das einen Querträger (1) umfasst, der die zwei oberen Teile (2) der Insassenraumseiten (3) miteinander in einer Zone verbindet, die sich über der Öffnung (4) der Windschutzscheibe befindet, wobei dieser Querträger (1) eine obere Schale aus Blech umfasst, die auf eine untere Schale aus Blech geschweißt ist, die zwischen einander einen länglichen Hohlkörper definieren, wobei jedes der zwei Enden (1c) des Querträgers (1) mit dem oberen Teil (2) einer der zwei Insassenraumseiten (3) verbunden ist, **dadurch gekennzeichnet, dass** jedes der zwei Enden (1c) des Querträgers (1) eine Fläche (1d) umfasst, die auf einer komplementären Fläche (2a) des oberen Teils (2) einer der zwei Insassenraumseiten in Auflage ist, wobei die zwei Flächen (1d, 2a) miteinander durch einen Haken (7) verbunden sind, der fest mit einer der zwei Flächen (1d, 2a) verbunden ist, der in eine Bohrung (8) eingefügt ist, die in der anderen Fläche hergestellt ist, wobei es die Verbindung einem Teil des Querträgers (1) erlaubt, entlang einer Achse (6) im Wesentlichen parallel zu der Längsachse des Fahrzeugs in dem Fall eines Stoßes, der auf dem Teil des Querträgers (1) ausgeübt wird, zu schwenken.

2. Kraftfahrzeug nach Anspruch 1, **dadurch gekennzeichnet, dass** der Haken aus einer Pratze (7) besteht, die auf einem Teil aus Blech des oberen Teils (2) einer der Insassenraumseiten ausgeschnitten und gefaltet wird, wobei diese Pratze (7) in eine Bohrung (8), die in der unteren Schale des Querträgers (1) hergestellt ist, eingeführt ist.

3. Kraftfahrzeug nach einem der Ansprüche 1 oder 2, **dadurch gekennzeichnet, dass** der Haken (7) auf der Schwenkachse (6) des Teils des Querträgers (1) liegt.

4. Kraftfahrzeug nach einem der Ansprüche 1 bis 3, **dadurch gekennzeichnet, dass** die obere Schale des Querträgers (1) in einer Zone, die zwischen jedem der zwei Enden (1c) des Querträgers (1) und dessen Mitte liegt, einen vorstehenden Teil (9) umfasst, der mit einem Ende (1c) des Querträgers (1) durch einen gerundeten Hohlraumteil (10) verbunden ist.

5. Kraftfahrzeug nach einem der Ansprüche 2 bis 5, **dadurch gekennzeichnet, dass** jedes der Enden (1c) des Querträgers (1) axial in eine Aufnahme eingefügt ist, die in dem oberen Teil (2) einer der zwei Insassenraumseiten (3) eingefügt ist, wobei die Aufnahme die komplementäre Fläche (2a) umfasst, auf der die Fläche (1d) des Endes des Querträgers (1) aufliegt, und zwei nach oben aufgeweitete Flächen (2b, 2c), die jeweils mit einem der zwei Ränder der komplementären Fläche (2a) verbunden sind.

6. Kraftfahrzeug nach Anspruch 5, **dadurch gekennzeichnet, dass** die Aufnahme außerdem eine Fläche (2d) umfasst, die sich über dem Ende (1c) des Querträgers (1) erstreckt.

7. Kraftfahrzeug nach einem der Ansprüche 1 bis 6, **dadurch gekennzeichnet, dass** es einen abnehmbaren Himmel umfasst.

8. Kraftfahrzeug nach Anspruch 7, **dadurch gekennzeichnet, dass** es ein Kabriolett ist.

## Claims

1. A motor vehicle comprising a crossmember (1) which interconnects the two upper portions (2) of the passenger compartment sides (3) in a zone situated above the aperture (4) of the windscreen, this crossmember (1) including an upper body shell made from sheet metal and welded to a lower body shell made from sheet metal, defining between them an elongate hollow body, each of the two ends (1c) of the crossmember (1) being connected to the upper portion (2) of one of the two passenger compartment sides (3), **characterized in that** each of the two ends (1c) of the crossmember (1) comprises a surface (1d) which rests on a complementary surface (2a) of the upper portion (2) of one of the two passenger compartment sides, the two surfaces (1d, 2a) being connected to one another by a hook (7) integral with one of the two surfaces (1d, 2a) engaged in a hole (8) formed in the other surface, the connection permitting one part of the crossmember (1) to pivot about an axis (6) that is substantially parallel to the longitudinal axis of the vehicle in the event of an impact exerted on said part of the crossmember (1).

2. The motor vehicle according to Claim 1, **characterized in that** the hook is constituted by a lug (7) cut out and bent on a sheet metal part of side upper portion (2) of one of the passenger compartment sides, this lug (7) being engaged in a hole (8) formed in the lower body shell of the crossmember (1).

3. The motor vehicle according to one of Claims 1 or 2, **characterized in that** said hook (7) is situated on said pivot axis (6) of said part of the crossmember (1).

4. The motor vehicle according to one of Claims 1 to 3, **characterized in that** the upper body shell of the crossmember (1) includes in a zone comprised between each of the two ends (1c) of the crossmember (1) and the centre thereof a projecting portion (9) which is connected to an end (1c) of the crossmember (1) by a rounded recessed portion (10).

5. The motor vehicle according to one of Claims 2 to 5, **characterized in that** each of the ends (1c) of the crossmember (1) is engaged axially in a housing formed in the upper portion (2) of one of the two passenger compartment sides (3), said housing including said complementary surface (2a) on which said surface (1d) of the end of the crossmember (1) rests and two upwardly flared surfaces (2b, 2c) each connected to one of the two edges of said complementary surface (2a).

6. The motor vehicle according to Claim 5, **characterized in that** said housing includes in addition a surface (2d) extending above the end (1c) of the crossmember (1).

7. The motor vehicle according to one of Claims 1 to 6, **characterized in that** it comprises a removable roof.

8. The motor vehicle according to Claim 7, **characterized in that** it is a cabriolet.
